# FASCICULE DE BREVET EUROPEEN

(11) **EP 1 816 839 B1**
(45) Date de publication et mention de la délivrance du brevet: **02.12.2009**
(21) Numéro de dépôt: 06300112.7
(22) Date de dépôt: 06.02.2006
(51) Int. Cl.: H04M 3/56

(54) **Procédé d'établissement d'une confèrence téléphonique dans un réseau de télécommunication utilisant le protocole SIP**
Verfahren zur Herstellung einer Telefonkonferenz in einem SIP-Protokoll benutzenden Fernmeldenetz
method of establishing a teleconference in a telecommunications network using the SIP protocol

(43) Date de publication de la demande: 08.08.2007
(73) Titulaire: Alcatel Lucent, 75008 Paris (FR)
(72) Inventeur: Tran, Nhut Quan, 95390 Saint-Prix (FR); Remtoula, Karimkhan, 92700 Colombes (FR)
(74) Mandataire: Nicolle, Olivier

(56) Documents cités:
- US-A- 6 018 360
- SIPPING WG J ROSENBERG ET AL: "Models for Multi Party Conferencing in SIP; draft-rosenberg-sip-confe rencing-models-01.txt;" IETF STANDARD-WORKING-DRAFT, INTERNET ENGINEERING TASK FORCE, IETF, CH, no. 1, 20 juillet 2001 (2001-07-20), XP015034694 ISSN: 0000-0004
- FTW I MILADINOVIC ET AL: "SIP Extension for Multiparty Conferencing; draft-miladinovic-sip-mult iparty-ext-00.txt" IETF STANDARD-WORKING-DRAFT, INTERNET ENGINEERING TASK FORCE, IETF, CH, 6 février 2001 (2001-02-06), XP015004409 ISSN: 0000-0004

## Description

La présente invention concerne un procédé d'établissement d'une conférence téléphonique dans un réseau de télécommunication utilisant le protocole SIP et un serveur destiné à la mise en oeuvre d'un tel procédé.

Un réseau de télécommunication peut effectuer la transmission de communications en utilisant le protocole du réseau Internet ou protocole 'IP' pour 'Internet Protocol' en anglais. Lorsque cette transmission concerne une communication téléphonique, cette transmission peut aussi être dénommée 'voix sur IP'.

Pour établir et gérer une telle communication téléphonique 'voix sur IP', il est connu de faire appel au protocole SIP pour 'Session Initiation Protocol' en anglais, ce protocole étant défini par la norme RFC 3261 de l'organisme Internet Engineering Task Force.

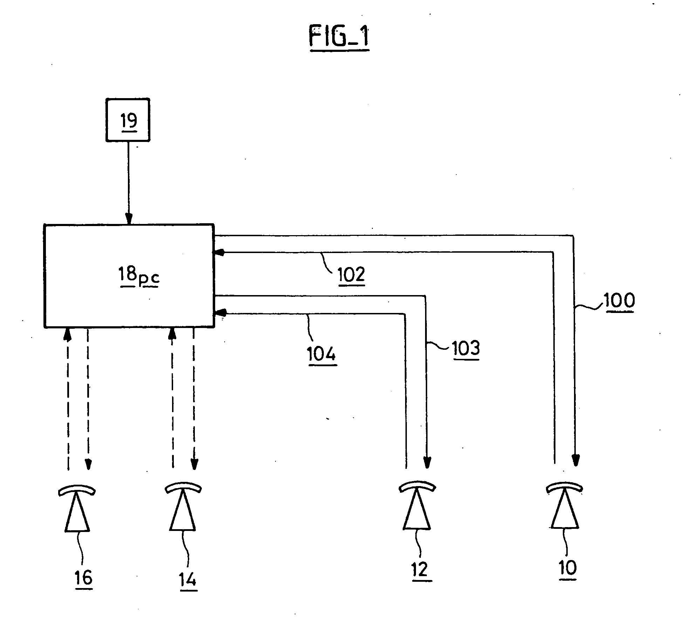

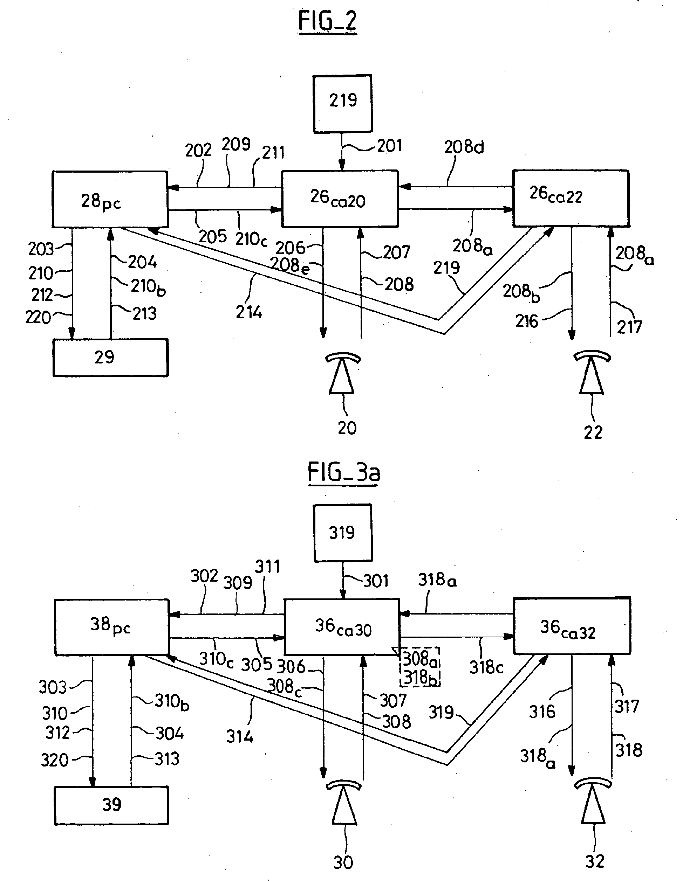

Dans le cadre de ce protocole SIP, il est possible d'établir une conférence téléphonique, c'est-à-dire une communication du type 'voix sur IP' à laquelle peuvent participer plus de deux terminaux distincts. Deux procédés, décrits en détail ci-dessous à l'aide des figures 1 et 2, sont actuellement mis en oeuvre pour établir une telle conférence téléphonique à partir d'une communication existante entre deux terminaux.

Selon un premier procédé illustré par la figure 1, une conférence téléphonique est mise en oeuvre entre des terminaux 10, 12, 14 et 16 en établissant toutes les communications issues de ces terminaux grâce à un serveur 18_{pc}, dénommé pont de conférence par la suite, qui comprend les ressources logicielles et physiques, tels que des connecteurs, pour établir une conférence téléphonique entre ces différents terminaux.

En considérant que l'utilisateur du terminal 10 souhaite établir une communication avec l'utilisateur du terminal 12, l'utilisateur du terminal 10 informe le pont 18_{pc} à l'aide d'une application 19 de cette requête. Le pont de conférence 18_{pc} transmet alors un premier signal 100 invitant le terminal 10 à une communication avec le terminal 12.

Lorsque le terminal 10 donne son accord (signal 102) à cette communication, le pont de conférence 18_{pc} transmet un signal 103 invitant le terminal 12 à une communication avec le terminal 10 de telle sorte que, lorsque ce terminal 12 accepte cette communication (signal 104), le pont 18_{pc} de conférence peut établir et gérer une communication entre ces terminaux 10 et 12.

La communication entre les terminaux 10 et 12 étant gérée par un pont de conférence 18_{pc}, des terminaux 14 ou 16 peuvent joindre la communication existante entre ces terminaux 10 et 12. A cet effet, une simple procédure d'invitation et d'acceptation avec le pont de conférence 18_{pc} est requise pour chacun de ces terminaux 14 et 16, cette procédure d'invitation et d'acceptation étant similaire à la procédure décrite pour l'établissement des communications entre le pont de conférence 18_{pc} et chacun des terminaux 10 et 12.

Ce premier procédé présente l'inconvénient de mettre en oeuvre un pont de conférence 18_{pc} pour toute communication établie à partir de chacun de ces terminaux 10, 12, 14 et 16. Dès lors, des ressources de ce pont 18_{pc} de conférence sont requises même lorsque deux terminaux 10 et 12 souhaitent effectuer une simple communication sans la participation d'un troisième terminal, bloquant ainsi des ressources du pont de conférence 18_{pc} à l'égard d'autres terminaux souhaitant éventuellement établir une conférence téléphonique.

Pour remédier à ce problème et optimiser l'utilisation des ressources d'un pont de conférence en allouant ces dernières aux seules communications requérant une conférence téléphonique, il est connu d'utiliser un second procédé décrit en détail ci-dessous à l'aide de la figure 2 où, pour des raisons de clarté, différents signaux transmis entre un même émetteur et un même destinataire sont représentés par un même lien.

Dans ce second procédé, les signaux relatifs à l'établissement et à la gestion d'une communication entre deux terminaux 20 et 22 sont transmis par des serveurs 26_{ca20} et 26_{ca22} de nature distincte à celle d'un pont 28_{pc} de conférence. De fait, les serveurs 26_{ca20} et 26_{ca22} effectuent un simple relais des signaux de contrôle de la communication et sont dénommés par la suite contrôleurs d'appel 26_{ca20} ou 26_{ca22} ou, plus simplement, contrôleurs 26_{ca20} ou 26_{ca22}.

L'établissement d'une communication entre le terminal 20 et le terminal 22 via ces contrôleur 26_{ca20} et 26_{ca22} met en oeuvre un procédé conforme au protocole SIP au cours duquel le pont de conférence n'est pas requis. Ainsi, les ressources du pont de conférence ne sont pas sollicitées pour une simple communication entre ces deux terminaux 20 et 22.

Lorsque la communication entre les deux terminaux est établie, l'utilisateur d'un terminal, par exemple le terminal 20, peut requérir l'établissement d'une conférence téléphonique à l'aide d'une application 219.

Dans ce cas, la communication entre le terminal 20 et le terminal 22 doit être établie via le pont 28_{pc} de conférence afin que, par exemple, au moins un troisième terminal puisse participer à une communication avec les terminaux 20 et 22 en établissant également une communication avec le pont 28_{pc} de conférence.

A cet effet, un signal 201 issu d'une application 219 est transmis au contrôleur 26_{ca20'} ce signal 201 indiquant que la communication entre les terminaux 20 et 22 doit être désormais gérée via le pont de conférence 28_{pc} pour permettre à d'autres terminaux de participer à cette communication.

A la suite de ce signal 201, le contrôleur 26_{ca20} transmet un signal 202 au pont 28_{pc} de conférence afin que ce dernier commande (signal 203) aux moyens physiques 29 de conférence, également dénommés Mediagateway, la mise en oeuvre d'une telle communication.

Lorsque ces moyens physiques 29 confirment la possibilité d'établir une communication (signal 204) avec le terminal 20, le pont 28_{pc} de conférence transmet un signal 205 au contrôleur 26_{ca20} qui peut alors requérir auprès du terminal 20 (signal 206) l'interruption de sa communication en cours avec le terminal 22, cette interruption visant à permettre l'établissement de la communication avec le pont de conférence.

Lorsque le terminal 20 confirme la mise en oeuvre d'une communication à travers le pont 28_{pc} de conférence (signal 207) et son accord pour abandonner la communication en cours avec le terminal 22 (signal 208), le contrôleur d'appel 26_{ca20} génère deux signaux :
- Un premier signal 208a destiné au contrôleur 26_{ca22} du second terminal 22 pour que ce dernier gère l'interruption de sa communication avec le terminal 20.
- A la suite de ce premier signal 208a, le contrôleur 26_{ca22} transmet un signal 208b requérant au terminal 22 d'abandonner sa communication avec le terminal 20. Le terminal 22 confirme cet abandon par un signal 208c qui est relayé par les contrôleurs 26_{ca22} et 26_{ca20} vers le terminal 20 (signaux 208d et 208e).
- Un second signal 209 pour informer le pont 28_{pc} de conférence de la disponibilité du terminal 20 pour établir une communication via ce pont 28_{pc}.

A la suite de ce second signal 209, le pont 28pc de conférence peut commander à ses moyens physiques 29 (signal 210) la mise en oeuvre de la conférence. Lorsque ces moyens confirment une telle mise en oeuvre (signal 210b), le pont 28_{pc} effectue une procédure de mise en communication (signal 210c) avec le contrôleur d'appel 26_{CA20}.

Lorsque l'acceptation du contrôleur d'appel 26_{CA20} (signal 211) est transmise aux moyens physiques 29 (signal 212), ces derniers peuvent requérir (signal 213) la mise en oeuvre de la communication avec le terminal 22 au moyen d'une procédure d'invitation et d'acceptation conformément ou protocole SIP et telle que déjà décrite (signaux 214, 216, 217, 219 et 220).

Il apparaît donc que chacun des terminaux 20 et 22 établit une communication avec le pont 28_{pc} de conférence pour aboutir à l'établissement d'une conférence téléphonique.

Le document IETF « Models for Multi Party Conferencing in SIP" (Sipping WG) reflète une telle solution.

La présente invention résulte d'une constatation propre à l'invention selon laquelle un tel procédé n'est pas satisfaisant compte tenu de la nature de l'interruption de la communication entre les terminaux 20 et 22. En effet, l'interruption de la communication est pratiquement imperceptible pour l'utilisateur du terminal 20 puisque l'abandon de la communication avec le terminal 22 est pratiquement simultané avec l'établissement de la communication avec le pont 28_{pc}.

Mais l'utilisateur du terminal 22, qui ne prend pas l'initiative d'établir une conférence doit abandonner sa communication en cours avec le terminal 20 et attendre d'être invité à une nouvelle communication par le pont de conférence 28_{pc} de telle sorte que, pendant cette attente, son utilisateur peut avoir l'impression de perdre la communication avec le terminal 20 et effectuer des opérations indésirables telles que tenter d'établir une communication avec le terminal 20 ou un autre terminal.

La présente invention vise à fournir un procédé d'établissement d'une conférence téléphonique à partir d'une simple communication entre deux terminaux contrôlée selon le protocole SIP et qui ne présente aucun des inconvénients liés aux procédés décrits ci-dessus, à savoir ni l'utilisation constante de ressources propres à une conférence téléphonique (premier procédé) ni la mise en oeuvre d'une attente sans communication pour un des terminaux (second procédé).

Le document US 6 018 360 proprose un procédé d'établissement d'une conférence téléphonique à partir d'un appel établi selon le standard H323.

C'est pourquoi, l'invention concerne un procédé d'établissement d'une conférence téléphonique dans un réseau de télécommunications utilisant le protocole SIP pour établir une communication entre un premier terminal et un second terminal, des contrôleurs d'appels relayant des signaux de cette communication, caractérisé en ce qu'il comprend les étapes suivantes :
- l'étape d'interrompre la communication du premier terminal avec le second terminal pour établir une communication entre ce premier terminal et un pont de conférence,
- l'étape de simuler vis-à-vis du second terminal le maintien de sa communication avec le premier terminal à l'aide d'au moins un des contrôleurs d'appel, et
- l'étape de simuler vis-à-vis du second terminal une interruption de sa communication avec le premier terminal pour établir une communication entre ce second terminal et le pont de conférence.

Un tel procédé présente de nombreux avantages. Notamment, il permet l'établissement d'une communication téléphonique entre deux terminaux sans faire usage du pont de conférence de façon abusif, contrairement au premier procédé selon l'art antérieur, puisqu'une simple communication entre deux terminaux peut s'effectuer via des contrôleurs d'appels et sans requérir un pont de conférence.

De plus, un procédé conforme à l'invention n'entraîne pas l'impression d'une perte de communication pour l'utilisateur d'un terminal, lorsque sa communication avec un autre terminal est interrompue et qu'il reste en attente d'être requis par un pont de conférence, contrairement au second procédé selon l'art antérieur. En effet, dans un procédé conforme à l'invention, les deux terminaux interrompent leur communication, de façon réelle ou simulée, pratiquement simultanément avec l'établissement d'une communication avec le pont de conférence.

Dans une réalisation, le procédé comprend l'étape supplémentaire d'inhiber un signal d'interruption émis par le premier terminal vers le second terminal lors de l'interruption de sa communication avec ce second terminal.

Selon une réalisation, le procédé comprend l'étape supplémentaire d'inhiber un signal d'interruption émis par le second terminal vers le premier terminal lors de la simulation de l'interruption de sa communication avec le premier terminal.

Dans une réalisation, le procédé comprend l'étape supplémentaire de générer un signal confirmant une transmission correcte d'un signal inhibé afin de simuler la transmission de ce signal inhibé.

Selon une réalisation, l'établissement d'une communication entre le premier terminal et le pont de conférence s'effectuant à partir d'un signal d'acceptation émis par ce premier terminal vers le pont, le procédé comprend l'étape supplémentaire d'émettre ce signal d'acceptation de façon pratiquement simultanée à l'émission d'un signal par le premier terminal pour interrompre sa communication avec le second terminal.

Dans une réalisation, l'établissement d'une communication entre le second terminal et le pont de conférence s'effectuant à partir d'un signal d'acceptation émis par ce second terminal vers le pont, le procédé comprend l'étape supplémentaire d'émettre ce signal d'acceptation de façon pratiquement simultanée à l'émission d'un signal par ce second terminal pour simuler l'interruption de sa communication avec le premier terminal.

Finalement, l'invention concerne également un serveur transmettant des signaux dans un réseau de télécommunications utilisant le protocole SIP pour établir une communication entre un premier terminal et un second terminal caractérisé en ce qu'il comprend des moyens pour simuler vis-à-vis du second terminal le maintien de sa communication avec le premier terminal lorsque ce dernier établit de façon pratiquement simultanée une communication avec un pont de conférence, et des moyens pour simuler vis-à-vis du second terminal une interruption de sa communication avec le premier terminal afin d'établir une communication entre ce second terminal et le pont de conférence.

Grâce à un tel serveur, l'établissement d'une conférence téléphonique entre deux terminaux en communication peut s'effectuer en minimisant les ressources requises par cette communication et sans imposer à l'utilisateur de second terminal l'impression d'avoir perdu la communication avec le premier terminal.

Dans une réalisation, le serveur comprend des moyens pour inhiber un signal d'interruption émis par le premier terminal vers le second terminal lors de l'interruption de sa communication avec le second terminal.

Selon une réalisation, le serveur comprend des moyens pour inhiber un signal d'interruption émis par le second terminal vers le premier terminal lors de l'interruption de sa communication avec le second terminal.

Dans une réalisation, le serveur comprend des moyens pour générer un signal confirmant une transmission correcte d'un signal inhibé et simuler ainsi la transmission de ce signal inhibé.

Dans une réalisation, le serveur comprend des moyens pour déclencher la mise en oeuvre d'une conférence téléphonique à partir d'un signal de commande transmis par une application distincte des terminaux.

D'autres caractéristiques et avantages de l'invention apparaîtront à la lumière de la description effectuée ci-dessous, à titre illustratif et non limitatif, de réalisations de cette invention faisant référence aux figures ci-jointes sur lesquelles :
- les figures 1 et 2, déjà décrites, illustrent des procédés de mise en oeuvre d'une conférence téléphonique conformément à l'art antérieur,
- les figures 3a et 3b illustrent un procédé établissant une conférence téléphonique conformément à l'invention.

Conformément à l'invention, la figure 3a décrit un procédé d'établissement d'une conférence téléphonique à partir d'une communication existante entre un premier terminal 30 et un second terminal 32, des contrôleurs d'appels 36_{ca30} et 36_{ca32} relayant des signaux de contrôle relatifs aux communications de ces terminaux 30 et 32 selon le protocole SIP.

Pour des raisons de clarté, les différents signaux transmis entre un même émetteur et un même destinataire sont représentés par un même lien.

L'établissement et la gestion de cette communication existante entre le terminal 30 et le terminal 32 selon le protocole SIP, via ces contrôleur 36_{ca30} et 36_{ca32}, ne requiert pas l'utilisation d'un pont de conférence 38_{pc}, ce qui permet d'optimiser les ressources de ce dernier en les attribuant aux seules communications entre au moins trois terminaux.

Par la suite, l'utilisateur du terminal 30 peut requérir l'établissement d'une conférence téléphonique à l'aide d'une application 319.

Dans ce cas, un signal 301 issu de cette application 319 est transmis au contrôleur 36_{ca30}, ce signal 301 indiquant qu'une communication entre les terminaux 30 et 32 doit être gérée par le pont de conférence 38_{pc} pour établir une conférence téléphonique entre ces deux terminaux 30 et 32.

A la suite de ce signal 301, le contrôleur 36_{ca30} transmet un signal 302 au pont 38pc de conférence qui émet une requête (signal 303) vers les moyens physiques 39, ou « Mediagateway », du pont 38_{pc} de conférence pour mettre en oeuvre une communication avec le terminal 30.

Lorsque ces moyens physiques confirment la possibilité d'une telle communication (signal 304), le pont 38_{pc} de conférence transmet un signal 305 au contrôleur 36_{ca30} qui peut alors requérir auprès du terminal 30 (signal 306) l'abandon de la communication en cours avec le terminal 32.

Lorsque le terminal 30 confirme la mise en oeuvre d'une communication à travers le pont 38pc de conférence (signal 307) et son accord pour abandonner la communication en cours avec le terminal 32 (signal 308), le contrôleur d'appel 36_{ca30} génère deux signaux conformément à l'art antérieur, à savoir :
- Un premier signal 309 vers le pont 38pc de conférence pour donner son accord à l'établissement d'une communication à travers ce pont de conférence, et
- Un second signal 308a destiné au terminal 32 pour que ce dernier abandonne sa communication en cours avec le terminal 30.

Toutefois, conformément à l'invention, ce contrôleur d'appel 36_{ca30} comprend des moyens pour inhiber ou bloquer le signal 308a de telle sorte que le terminal 32 ignore que sa communication avec le terminal 30 est abandonné. En d'autres termes, le maintien de sa communication avec le terminal 30 est simulé vis-à-vis du terminal 32 tout en permettant au contrôleur d'appel 36_{ca30} d'émettre une confirmation 308e vers le terminal 30 concernant la transmission du signal 308a afin de respecter le protocole SIP.

Lorsque le contrôleur d'appel 36_{ca30} émet le signal 309, une série de signaux 310, 310b, 310c, 311, 312 et 313 ayant une fonction similaire à la série de signaux 210, 210b, 210c, 211, 212 et 213 intervient pour mettre oeuvre la communication avec le terminal 30 et transmettre un signal 314 d'invitation au contrôleur 36_{ca32}.

Ce dernier requiert alors auprès du terminal 32 (signal 316) l'établissement d'une communication avec le pont de conférence et l'abandon de sa communication simulée avec le terminal 30, ce dernier confirmant la mise en oeuvre d'une telle communication à travers le pont 38pc de conférence (signal 317) tout en transmettant son accord pour abandonner la communication simulée avec le terminal 30 (signal 318). C'est pourquoi, le contrôleur d'appel 36_{ca32} transmet deux signaux, à savoir :
- Un premier signal 319 vers le pont 38_{pc} de conférence pour donner son accord à l'établissement d'une communication à travers ce pont 38_{pc} de conférence, communication mise en oeuvre par les moyens physiques 39 à la suite du signal 320, et
- Un second signal 318a destiné au contrôleur 36_{ca30} du premier terminal 30 pour interrompre la communication simulée.

Le contrôleur d'appel 36_{ca30} comprend des moyens pour inhiber ou bloquer ce signal 318a et des moyens pour transformer ce signal 318a en un signal 318b interne qui entraîne l'émission par le contrôleur d'appel 36_{ca30'} sans solliciter le terminal 30, d'un signal 318c destiné au contrôleur d'appel 36_{ca32} pour confirmer l'interruption de la communication simulée entre les terminaux 30 et 32.

Le signal 318c permet ainsi au terminal 32 d'établir une communication avec le pont 38_{pc} de conférence en abandonnant la communication avec le terminal 30.

Grâce à un procédé conforme à l'invention, il apparaît que la communication en cours entre les terminaux 30 et 32, directement gérée par des contrôleurs d'appel 36_{ca30} et 36_{ca32}, a été transformée en une communication gérée à travers le pont 38_{pc} de conférence en évitant une atteinte au terminal 32 entre l'interruption de sa communication avec le terminal 30 et l'établissement de sa communication avec le pont 38_{pc} de conférence.

De fait, l'interruption de la communication pour chacun des terminaux 30 et 32 s'effectue de façon pratiquement simultanée à l'établissement de leur communication respective avec le pont 38_{pc} de conférence de telle sorte que les utilisateurs de ces terminaux ne peuvent ressentir l'impression de perdre la communication en cours lors de l'établissement de la conférence téléphonique.

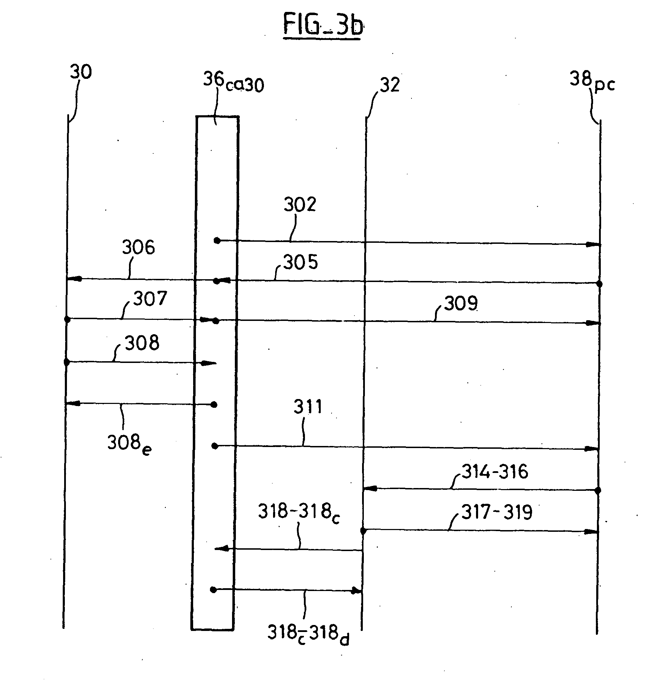

De façon schématique, la figure 3b illustre la chronologie des échanges de certains des signaux mentionnés ci-dessus.

Ainsi, sur la figure 3b sont représentés les terminaux 30 et 32, le contrôleur 36_{ca30} et le pont de conférence 28pc par des colonnes à partir desquelles sont situés différents signaux décrits ci-dessous.

Une telle représentation permet d'illustrer en détail le blocage ou l'inhibition effectué par le contrôleur d'appel 36_{ca30} vis-à-vis du signal 308 émis par le terminal 30 et vis-à-vis du signal 31 8a émis par le terminal 32.

Cette représentation permet également d'illustrer la simultanéité pratique entre l'émission des signaux d'interruption de la communication entre terminaux (signal 308 pour le terminal 30 et 318 pour le terminal 32) et l'émission des signaux d'établissement d'une communication avec le pont 38_{pc} de conférence (signal 307 pour le terminal 30 et 317 pour le terminal 32).

La figure 3b représente les moyens propres à l'invention dans le contrôleur 36ca30. Toutefois, il est clair que l'invention peut être mise en oeuvre en localisant les moyens inhibiteurs du signal 308a de déconnexion du terminal 30 et/ou les moyens inhibiteurs du signal 318a de déconnexion du terminal 32 vis-à-vis du terminal 30 dans un ou plusieurs autres serveurs tels que le contrôleur 36ca30 ou, d'une façon générale, dans tout serveur interposé entre ces deux terminaux.

## Revendications

1. Procédé d'établissement d'une conférence téléphonique dons un réseau de télécommunications utilisant le protocole SIP pour établir une communication entre un premier terminal (30) et un second terminal (32), des contrôleurs d'appels (36_{ca30}, 36_{ca32}) relayant des signaux de cette communication, **caractérisé en ce qu'**il comprend les étapes suivantes :
- l'étape (30) d'interrompre la communication du premier terminal avec le second terminal (32) pour établir une communication entre ce premier terminal et un pont de conférence (38_{pc}),
- l'étape de simuler vis-à-vis du second terminal (32) le maintien de sa communication avec le premier terminal (30) à l'aide d'au moins un des contrôleurs d'appel (36_{ca30}, 36_{ca32}), et
- l'étape de simuler vis-à-vis du second terminal (32) une interruption de sa communication avec le premier terminal (30) pour établir une communication entre ce second terminal et le pont de conférence (38_{pc}).

2. Procédé selon la revendication 1 **caractérisé en ce qu'**il comprend l'étape supplémentaire d'inhiber un signal (308a) d'interruption émis par le premier terminal (30) vers le second terminal (32) lors de l'interruption de sa communication avec le second terminal (32).

3. Procédé selon la revendication 1 ou 2 **caractérisé en ce qu'**il comprend l'étape supplémentaire d'inhiber un signal (318a) d'interruption émis par le second terminal (32) vers le premier terminal (30) lors de la simulation de l'interruption de sa communication avec le premier terminal.

4. Procédé selon la revendication 2 ou 3 **caractérisé en ce qu'**il comprend l'étape supplémentaire de générer un signal (318b, 318c) confirmant une transmission correcte d'un signal inhibé (318a) afin de simuler la transmission de ce signal inhibé (318a).

5. Procédé selon la revendication 1, 2, 3 ou 4 **caractérisé en ce que**, l'établissement d'une communication entre le premier terminal (30) et le pont de conférence (38_{pc}) s'effectuant à partir d'un signal d'acceptation (307) émis par ce premier terminal (30) vers le pont (38_{pc}), il comprend l'étape supplémentaire d'émettre ce signal d'acceptation (307) de façon pratiquement simultanée à l'émission d'un signal (308) par le premier terminal (30) pour interrompre sa communication avec le second terminal (32).

6. Procédé selon l'une des revendications précédentes **caractérisé en ce que**, l'établissement d'une communication entre le second terminal (32) et le pont de conférence (38_{pc}) s'effectuant à partir d'un signal d'acceptation (317) émis par ce second terminal (32) vers le pont (38_{pc}), il comprend l'étape supplémentaire d'émettre ce signal d'acceptation (317) de façon pratiquement simultanée à l'émission d'un signal (318) par ce second terminal (32) pour simuler l'interruption de sa communication avec le premier terminal (30).

7. Serveur (36_{ca30}) transmettant des signaux dans un réseau de télécommunications utilisant le protocole SIP pour établir une communication entre un premier terminal (30) et un second terminal (32) **caractérisé en ce qu'**il comprend :
- des moyens pour simuler vis-à-vis du second terminal (32) le maintien de sa communication avec le premier terminal (30) lorsque ce dernier établit de façon pratiquement simultanée une communication avec un pont de conférence (38_{pc}), et
- des moyens pour simuler vis-à-vis du second terminal (32) une interruption de sa communication avec le premier terminal (30) afin d'établir une communication entre ce second terminal et le pont de conférence (38_{pc}).

8. Serveur (36_{ca30}) selon la revendication 7 **caractérisé en ce qu'**il comprend des moyens pour inhiber un signal (308a) d'interruption émis par le premier terminal (30) vers le second terminal lors de l'interruption de sa communication avec le second terminal.

9. Serveur (36_{ca30}) selon la revendication 7 ou 8 **caractérisé en ce qu'**il comprend des moyens pour inhiber un signal (318a) d'interruption émis par le second terminal (32) vers le premier terminal (30) lors de la simulation de l'interruption de sa communication avec ce premier terminal (30).

10. Serveur (36_{ca30}) selon la revendication 9 **caractérisé en ce qu'**il comprend des moyens pour générer un signal (318b, 318c) confirmant une transmission correcte d'un signal inhibé (308a) et simuler ainsi la transmission de ce signal inhibé.

11. Serveur (36_{ca30}) selon l'une des revendications 7 à 10 **caractérisé en ce qu'**il comprend des moyens pour déclencher la mise en oeuvre d'une conférence téléphonique à partir d'un signal de commande transmis par une application (319) distincte des terminaux (30, 32).

## Claims

1. A method for establishing a telephone conference within a telecommunications network using the SAP protocol to establish communication between a first terminal (30) and a second terminal (32), and call controllers (36_{ca30}, 36_{ca32}) relaying signals of that communication, **characterized in that** it comprises the following steps:
- the step of interrupting the communication of the first terminal (30) with the second terminal (32) in order to establish communication between that first terminal (30) and a conference bridge (38_{pc}),
- the step of simulating, for the second terminal (32), the continuity of its communication with the first terminal (30), with the assistance of at least one of the call controllers (36_{ca30}, 36_{ca32}), and
- the step of simulating, for the second terminal (32), an interruption in its communication with the first terminal (30) in order to establish communication between that second terminal (32) and the conference bridge (38pc).

2. A method according to claim 1, **characterized in that** it comprises the additional step of inhibiting an interruption signal (308a) sent by the first terminal (30) to the second terminal (32) when its communication with the second terminal (32) is interrupted.

3. A method according to claim 1 or 2, **characterized in that** it comprises the additional step of inhibiting an interruption signal (318a) sent by the second terminal (32) to the first terminal (30) when its communication with the first terminal (30) is interrupted.

4. A method according to claim 2 or 3, **characterized in that** it comprises the additional step of generating a signal (318b, 318c) confirming a correct transmission of an inhibited signal (318a) in order to simulate the transmission of that inhibited signal (318a).

5. A method according to claim 1, 2, 3, or 4, **characterized in that**, the establishment of communication between the first terminal (30) and the conference bridge (38_{pc}) being performed based on an acceptance signal (307) sent by that first terminal (30) to the bridge (38_{pc}), it comprises the additional step of sending that acceptance signal (307) in a manner that is practically simultaneous with the sending of a signal (308) by the first terminal (30) in order to interrupt its communication with the second terminal (32).

6. A method according to one of the preceding claims, **characterized in that**, the establishment of communication between the second terminal (32) and the conference bridge (38_{pc}) being performed based on an acceptance signal (317) sent by that second terminal (32) to the bridge (38_{pc}), it comprises the additional step of sending that acceptance signal (317) at practically the same time as the sending of a signal (318) by the second terminal (32) in order to interrupt its communication with the first terminal (30).

7. A server (36_{ca30}) transmitting signals within the telecommunications network using the SAP protocol to establish communication between a first terminal (30) and a second terminal (32), **characterized in that** it comprises:
- means for simulating, for the second terminal (32), the continuation of its communication with the first terminal (30), when the first terminal (30) establishes communication with a conference bridge (38_{pc}) at practically the same time, and
- means for simulating, for the second terminal (32), an interruption in its communication with the first terminal (30) in order to establish communication between that second terminal (32) and the conference bridge (38_{pc}).

8. A server (36_{ca30}) according to claim 7, **characterized in that** it comprises means for inhibiting an interruption signal (308a) sent by the first terminal (30) to the second terminal (32) when its communication with the second terminal (32) is interrupted.

9. A server (36_{ca30}) according to claim 7 or 8, **characterized in that** it comprises means for inhibiting an interruption signal (318a) sent by the second terminal (32) to the first terminal (30) when its communication with the first terminal (30) is interrupted.

10. A server (36_{ca30}) according to claim 9, **characterized in that** it comprises means for generating a signal (318b, 318c) confirming a correct transmission of an inhibited signal (308a) and thereby simulating the transmission of that inhibited signal.

11. A server (36_{ca30}) according to one of claims 7 to 10, **characterized in that** it comprises means for triggering the implementation of a telephone conference based on a command signal transmitted by an application (319) distinct from the terminals (30, 32).

## Patentansprüche

1. Verfahren zum Aufbau einer Telefonkonferenz in einem Telekommunikationsnetz unter Verwendung des SIP-Protokolls, um eine Verbindung zwischen einem ersten Endgerät (30) und einem zweiten Endgerät (32) aufzubauen, wobei Verbindungssteuerungseinheiten (36_{ca30}, 36_{ca32}) Signale dieser Verbindung übertragen, **dadurch gekennzeichnet, dass** es die folgenden Schritte umfasst:
- den Schritt (30) des Unterbrechens der Verbindung vom ersten Endgerät zum zweiten Endgerät (32), um eine Verbindung zwischen diesem ersten Endgerät und einer Konferenzbrücke (38_{pc}) aufzubauen,
- den Schritt des Simulierens, gegenüber dem zweiten Endgerät (32), des Aufrechterhaltens seiner Verbindung zum ersten Endgerät (30) anhand mindestens einer seiner Verbindungssteuerungseinheiten (36_{ca30}, 36_{ca32}), und
- den Schritt des Simulierens, gegenüber dem zweiten Endgerät (32), einer Unterbrechung seiner Verbindung zum ersten Endgerät (30), um eine Verbindung zwischen diesem zweiten Endgerät und der Konferenzbrücke (38_{pc}) aufzubauen.

2. Verfahren nach Anspruch 1, **dadurch gekennzeichnet, dass** es den zusätzlichen Schritt des Sperrens eines Unterbrechungssignals (308a), welches vom ersten Endgerät (30) an das zweite Endgerät (32) bei der Unterbrechung seiner Verbindung zum zweiten Endgerät (32) ausgegeben wird, umfasst.

3. Verfahren nach Anspruch 1 oder 2, **dadurch gekennzeichnet, dass** es den zusätzlichen Schritt des Sperrens eines Unterbrechungssignals (318a), welches vom zweiten Endgerät (32) an das erste Endgerät (30) bei der Simulation der Unterbrechung dessen Verbindung zum ersten Endgerät ausgegeben wird, umfasst.

4. Verfahren nach Anspruch 2 oder 3, **dadurch gekennzeichnet, dass** es den zusätzlichen Schritt des Erzeugens eines Signals (318b, 318c), welches eine korrekte Übertragung eines gesperrten Signals (318a) bestätigt, umfasst, um die Übertragung dieses gesperrten Signals (318a) zu simulieren.

5. Verfahren nach Anspruch 1, 2, 3 oder 4, **dadurch gekennzeichnet, dass**, da der Aufbau einer Verbindung zwischen dem ersten Endgerät (30) und der Konferenzbrücke (38_{pc}) ausgehend von einem von diesem ersten Endgerät (30) an die Brücke (38_{pc}) ausgegebenen Akzeptanzsignals (307) erfolgt, es den zusätzlichen Schritt des Aussendens dieses Akzeptanzsignals (307) fast simultan zur Ausgabe eines Signals (308) durch das erste Endgerät (30) umfasst, um dessen Verbindung zum zweiten Endgerät (32) zu unterbrechen.

6. Verfahren nach einem der vorstehenden Ansprüche, **dadurch gekennzeichnet, dass** da der Aufbau einer Verbindung zwischen dem zweiten Endgerät (32) und der Konferenzbrücke (38_{pc}) ausgehend von einem von diesem zweiten Endgerät (32) an die Brücke (38_{pc}) ausgegebenen Akzeptanzsignals (317) erfolgt, es den zusätzlichen Schritt des Aussendens dieses Akzeptanzsignals (317) fast simultan zur Ausgabe eines Signals (318) durch dieses zweite Endgerät (32) umfasst, um die Unterbrechung dessen Verbindung zum ersten Endgerät (30) zu simulieren.

7. Server (36_{ca30}), welcher Signale in einem Telekommunikationsnetzwerk unter Verwendung des SIP-Protokolls überträgt, um eine Verbindung zwischen einem ersten Endgerät (30) und einem zweiten Endgerät (32) aufzubauen, **dadurch gekennzeichnet, dass** er umfasst:
- Mittel zum Simulieren, gegenüber dem zweiten Endgerät (32), des Aufrechterhaltens seiner Verbindung zum ersten Endgerät (30), wenn dieses praktisch simultan eine Verbindung zu einer Konferenzbrücke (38_{pc}) aufbaut, und
- Mittel zum Simulieren, gegenüber dem zweiten Endgerät (32), einer Unterbrechung seiner Verbindung zum ersten Endgerät (30), um eine Verbindung zwischen diesem zweiten Endgerät und der Konferenzbrücke (38_{pc}) aufzubauen.

8. Server (36_{ca30}) nach Anspruch 7, **dadurch gekennzeichnet, dass** er Mittel zum Sperren eines Unterbrechungssignals (308a), welches vom ersten Endgerät (30) während der Unterbrechung seiner Verbindung zum zweiten Endgerät an das zweite Endgerät ausgegeben wurde, umfasst.

9. Server (36_{ca30}) nach Anspruch 7 oder 8, **dadurch gekennzeichnet, dass** er Mittel zum Sperren eines Unterbrechungssignals (318a), welches vom zweiten Endgerät (32) an das erste Endgerät (30) während der Simulation der Unterbrechung seiner Verbindung zu diesem ersten Endgerät (30) ausgegeben wurde, umfasst.

10. Server (36_{ca30}) nach Anspruch 9, **dadurch gekennzeichnet, dass** er Mittel zum Erzeugen eines Signals (318b, 318c), welches eine korrekte Übertragung eines gesperrten Signals (308a) bestätigt, und zum Simulieren der Übertragung dieses gesperrten Signals umfasst.

11. Server (36_{ca30}) nach einem der Ansprüche 7 bis 10, **dadurch gekennzeichnet, dass** er Mittel zum Einleiten der Durchführung einer Telefonkonferenz anhand eines von einer sich von den Endgeräten (30, 32) unterscheidenden Anwendung (319) übertragenen Steuersignals umfasst.
